# EUROPEAN PATENT APPLICATION

(11) **EP 4 765 881 A1**
(43) Date of publication of application: **24.06.2026**
(21) Application number: 24222794.0
(22) Date of filing: 23.12.2024
(51) Int. Cl.: H04R 25/00, G10L 25/30

(54) **HEARING DEVICE WITH A PLURALITY OF ML MODELS**

(71) Applicant: GN Hearing A/S, 2750 Ballerup (DK)
(72) Inventor: DYRHOLM, Mads, 2750 Ballerup (DK); KVIST, Søren Helstrup, 2750 Ballerup (DK); LØNGAA, Michael, 2750 Ballerup (DK)
(74) Representative: Aera A/S

(57) **Abstract**

A hearing device and related methods are disclosed, the hearing device comprising an interface and one or more processors, the one or more processors comprising a first primary machine learning model and a first secondary machine learning model, the first primary machine learning model for provision of a first primary model output based on a first primary model input, the first secondary machine learning model for provision of a first secondary model output based on a first secondary model input, wherein the first secondary model input is based on the first primary model output.

## Description

The present disclosure relates to a hearing device and related methods in particular sensor data processing and improvement.

### BACKGROUND

Hearing instruments, His, aim to help end users improve their hearing experience. However, users may suffer from poor speech quality and low speech intelligibility in some challenging acoustical environments. Users may also struggle to understand when their visual field is blocked in some way and they are unable to see and lip read the speaker's mouth. In such challenging acoustical or visual environments, beamforming or other technologies may be helpful in directing the sound to more effectively improve the end user's hearing comprehension experience, hearing and comprehension of conversation may still be challenged.

### SUMMARY

Accordingly, there is a need for hearing devices, systems, and methods providing improved hearing device functionality including audio processing.

A hearing system is disclosed. The hearing system comprises a hearing device and optionally an accessory device. The hearing device comprises a first interface and one or more processors. The one or more processors of the hearing device comprise a first machine learning model also denoted first primary machine learning model for provision of a first model output also denoted first primary model output. The first (primary) model output is based on, such as a function of, comprising and/or being, a first (primary) model input. The first machine learning model may be a control model, e.g. for controlling audio processor and/or audio processing of the hearing device. The first machine learning model may be configured to provide as first model output one or more control signals, e.g. indicative of one or more operating parameters of the hearing device, such as gain parameters, program parameters, beamforming parameters, and/or noise cancellation parameters. The first model output of the first machine learning model may be fed to an audio processor. The accessory device comprises a second interface and one or more processors. The one or more processors of the accessory device comprise a second machine learning model for provision of a second model output. The second model output is based on, such as a function of, comprising and/or being, a second model input, wherein the accessory device is configured to transmit, via the second interface, a first accessory device output, e.g. based on, comprising and/or indicative of the second model output. The hearing device is optionally configured to receive, via the first interface, the first accessory device output. The first primary model input may be based on the first accessory device output.

Further, a method, such as a computer-implemented method, for training a first machine learning model of a hearing device is provided. The method comprises obtaining a training dataset. The training dataset comprises an audio training dataset and/or a model output training dataset, and a target output signal. The audio training dataset comprises one or more microphone input signals including a first microphone input signal and/or a second microphone input signal. The model output training dataset comprises a second model output of a second machine learning mode. The method comprises applying the audio training dataset and the model output training dataset as respective inputs to the first machine learning model for provision of a first model output; and training the first machine learning model based on the first model output and the target output signal. Thus, each training round of the method may comprise applying the audio training dataset and/or the model output training dataset as respective inputs to the first machine learning model. Each training round of the method comprises training the first machine learning model based on first model output and the target output signal.

Further, a method, such as computer-implemented method, for training a second machine learning model of an accessory device is provided. The method comprises obtaining a training dataset. The training dataset comprises a sensor training dataset, a model output training dataset, and a target output signal. The sensor training dataset comprises one or more microphone input signals including a first microphone input signal, image data and/or motion data. The model output training dataset comprises a second model output of a second machine learning model. The method comprises applying the sensor training dataset and/or the model output training dataset as respective inputs to the second machine learning model; and training the second machine learning model based on a second model output and the target output signal. Thus, each training round of the method may comprise applying the sensor training dataset and/or the model output training dataset as respective inputs to the second machine learning model. Each training round of the method comprises training the second machine learning model based on the second model output and the target output signal.

It is an advantage of the present disclosure that, by using ML to identify and process sensor data and other data from a hearing device and an accessory device, the hearing device can better identify and map generic voice features, an improved hearing experience is provided in a variety of acoustical environments. Further, the present disclosure provides an ML model capable of identifying generic voice features or other relevant voice data in order to improve the audio processing, which in turn may improve the hearing experience for an end user.

The present disclosure provides improved power management in a hearing system in that use of an accessory device allows for parts of the processing to occur outside of the hearing device. This may allow the hearing device to conserve power (e.g., extend battery life or reduce the size of battery needed), divert processing power to other, more essential functions, or reduce the size and/or weight of the overall device itself. This may also allow the hearing device to better accommodate forward compatibility, as some of the processing can occur in the accessory device itself, rather than the hearing device, thus extending its life cycle.

A hearing device is further disclosed. The hearing device comprises an interface and one or more processors. The one or more processors of the hearing device comprise or implements a first primary machine learning model, herein also referred to as first machine learning model, and/or a first secondary machine learning model. The first primary machine learning model may be a control model, e.g. for controlling audio processor and/or audio processing of the hearing device. The first primary machine learning model may be configured to provide as first primary model output one or more control signals, e.g. indicative of one or more operating parameters of the hearing device, such as gain parameters, program parameters, beamforming parameters, and/or noise cancellation parameters. The first secondary machine learning model may be an audio processing, e.g. for providing audio signal(s) as first secondary model output. The first primary machine learning model is for provision of a first primary model output. The first primary model output is based on, such as a function of, comprising and/or being, a first primary model input. The first secondary machine learning model is for provision of a first secondary model output. The first secondary model output is based on, such as a function of, comprising and/or being, a first secondary model input. The first secondary model input is based on the first primary model output and/or the first primary model input is based on, such as a function of, comprising and/or being, the first secondary model output

Further, a computer-implemented method for training a first primary machine learning model of a hearing device is disclosed, the method comprising obtaining a training dataset comprising an audio training dataset and/or a model output training dataset, and a target output signal, the audio training dataset comprising one or more microphone input signals including a first microphone input signal and/or a second microphone input signal, and the model output training dataset comprising first secondary model output of a first secondary machine learning model; applying the audio training dataset and/or the model output training dataset as respective inputs to the first primary machine learning model for provision of a first primary model output; and training the first primary machine learning model based on the first primary model output and the target output signal.

A computer-implemented method for training a first secondary machine learning model of a hearing device is disclosed, the method comprising obtaining a training dataset comprising an audio training dataset and/or a model output training dataset, and a target output signal, the audio training dataset comprising one or more microphone input signals including a first microphone input signal and/or a second microphone input signal, and the model output training dataset comprising first primary model output of a first primary machine learning model and/or second model output of a second machine learning model; applying the audio training dataset and/or the model output training dataset as respective inputs to the first secondary machine learning model for provision of a first secondary model output; and training the first secondary machine learning model based on the first secondary model output and the target output signal.

Applying a plurality of machine learning models in a hearing device may provide a more optimum use of the restricted memory and/or processing resources in a hearing device, e.g. by replacing a single and much more complex machine learning model.

### BRIEF DESCRIPTION OF THE DRAWINGS

The above and other features and advantages of the present invention will become readily apparent to those skilled in the art by the following detailed description of example embodiments thereof with reference to the attached drawings, in which:
Fig. 1 schematically illustrates an example hearing system according to this disclosure,
Fig. 2 schematically illustrates example hearing device system according to the disclosure,
Fig. 3 schematically illustrates an example hearing device according to the disclosure,
Fig. 4 schematically illustrates an example hearing device according to the disclosure,
Fig. 5 schematically illustrates an example hearing device according to the disclosure,
Fig. 6 schematically illustrates an example hearing device according to the disclosure,
Fig. 7 schematically illustrates an example hearing device according to the disclosure,
Fig. 8 schematically illustrates an example hearing device according to the disclosure,
Fig. 9 schematically illustrates an example accessory device according to the disclosure,
Fig. 10 schematically illustrates an example structure of a machine learning model,
Fig. 11 is a flowchart of an example method for training a machine learning model of a hearing device according to the disclosure,
Fig. 12 is a flowchart of an example method for training a machine learning model of an accessory device according to the disclosure,
Fig. 13 is a flowchart of an example method for training a machine learning model of a hearing device according to the disclosure, and
Fig. 14 is a flowchart of an example method for training a machine learning model of a hearing device according to the disclosure.

### DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A hearing system is disclosed. The hearing system comprises a hearing device and optionally an accessory device.

The hearing device may be configured to be worn at an ear of a user. The hearing device may be a hearable. The hearing device may be a hearing aid, wherein the processor(s) is configured to compensate for a hearing loss of a user.

The hearing device may be an ear bud, a hearing aid, a headset, a
personal sound amplification product (PSAP), an over-the-counter (OTC) hearing device, a hearing protection device, a custom hearing device or another ear-wearable hearing device. Hearing devices can include both prescription devices and non-prescription devices.

The hearing device may be embodied in various housing styles/form factors. Some of these form factors are a Behind-the-Ear (BTE) hearing device, a Receiver-in-Canal (RIC) hearing device, a Receiver-in-Ear (RIE) hearing device, or a Microphone-and-Receiver-in-Ear (MaRIE) hearing device. These devices have in common that they may comprise a BTE component configured to be worn behind the ear of the user and an in the ear (ITE) component configured to be inserted partly or fully into the user's ear canal. Generally, the BTE component may comprise at least one input transducer, a power source, and a processing unit. The term BTE hearing device may refer to a hearing device where the receiver, i.e. the output transducer, is comprised in the BTE component and sound is guided to the ITE component via a sound tube connecting the BTE and ITE components, whereas the terms RIE, RIC, and MaRIE devices refers to hearing devices where the receiver is comprised in the ITE component, which is coupled to the BTE component via a connector cable or wire configured for transferring electric signals between the BTE and ITE components.

The hearing device may be of the behind-the-ear (BTE) type, in-the-ear (ITE) type, in-the-canal (ITC) type, receiver-in-canal (RIC) type or receiver-in-the-ear (RITE) type. The hearing device may be a binaural hearing device, such as a binauaral hearing aid.

The hearing device comprises a first interface, and one or more processors.

The hearing device/first interface may be configured for wireless communication with one or more devices, such as with another hearing device, e.g. as part of a binaural hearing system, and/or with one or more accessory devices, such as a tablet computer, a laptop computer, a smartphone and/or a smart watch. An accessory device may operate, be, and/or function as an audio source. The hearing device/interface optionally comprises an antenna for converting one or more wireless input signals, e.g. RX events from the one or more connected audio sources. The wireless input signal(s) comprises or are representative of audio data. In other words, the audio data may be encoded in the wireless input signal(s). The wireless input signal(s) may origin from external audio source(s), such as audio sources, e.g. spouse microphone device(s), wireless TV audio transmitter(s), music player(s), car(s), doorbell(s), mobile phone(s), smart watch(es), and wireless audio transmitters(s), such as public wireless audio transmitter(s), e.g. in airports, train stations, stadiums, cinemas, and/or arenas. The wireless input signal(s) may origin from one or more accessory devices.

The hearing device/first interface optionally comprises a radio transceiver coupled to the antenna for converting the antenna output signal to audio data. Wireless signals from different external sources may be multiplexed in the radio transceiver to audio data or provided as separate audio data on separate transceiver output terminals of the radio transceiver. The hearing device may comprise a plurality of antennas and/or an antenna may be configured to be operate in one or a plurality of antenna modes. The transceiver input signal optionally comprises a first transceiver input signal representative of the first wireless signal from a first external source.

The hearing device comprises a set of transducers, such as microphones. The set of microphones may comprise one or more transducers, e.g., one or more microphones. The set of microphones comprises a first microphone for provision of a first microphone input signal and/or a second microphone for provision of a second microphone input signal. The set of microphones may comprise N microphones for provision of N microphone signals, wherein N is an integer in the range from 1 to 10. In one or more example hearing devices, the number N of microphones is two, three, four, five or more. The set of microphones may comprise a third microphone for provision of a third microphone input signal.

The hearing device optionally comprises a pre-processing unit. The pre-processing unit may be connected to the radio transceiver for pre-processing the transceiver input signal. The pre-processing unit may be connected the first microphone for pre-processing the first microphone input signal. The pre-processing unit may be connected the second microphone if present for pre-processing the second microphone input signal. The pre-processing unit may comprise one or more A/D-converters for converting analog microphone input signal(s) to digital pre-processed microphone input signal(s).

The hearing device comprises one or more processors for processing input signals, such as (pre-processed) transceiver input signal and/or (pre-processed) microphone input signal(s). The one or more processors provide an electrical output signal based on the input signals to the processor. Input terminal(s) of the processor are optionally connected to respective output terminals of the pre-processing unit. For example, a transceiver input terminal of the processor(s) may be connected to a transceiver output terminal of the pre-processing unit. One or more microphone input terminals of the processor(s) may be connected to respective one or more microphone output terminals of the pre-processing unit.

The one or more processors of the hearing device comprises or implements a first machine learning model also denoted a first primary machine learning model for provision of a first primary model output. The first model output, such as the first primary model output, is based on a first model input, such as a first primary model input. Optionally, at least one of the one or more processors may comprise a controller, where the controller may comprise the first machine learning model, such as the first primary machine learning model for provision of the first primary model output. In other words, a controller output of the controller may be based on, comprise and/or be the first primary model output

The one or more processors of the hearing device optionally comprises or implements a first secondary machine learning model for provision of a first secondary model output. The first secondary model output may be based on a first secondary model input. In examples, the first secondary model output is based on input from one or more microphones, controller output, or other output. In one or more examples, the first secondary model output is used as the electrical output signal or post-processed to form the electrical output signal.

The accessory device comprises a second interface and one or more processors. The one or more processors may comprise a second machine learning model for provision of a second model output. The second model output is based on a second model input. In other words, the one or more processors of the accessory device optionally comprises a second machine learning model, denoted a second model for provision of a second model output. The second model output is based on a second model input. Optionally, the second model input may be received from one or more sensors, where the sensors are part of and/or communicatively coupled to the accessory device, as described herein.

Optionally, the accessory device is further configured to transmit, via the second interface, a first accessory device output. Optionally, the first accessory device output is based on the second model output. The hearing device is optionally configured to receive, via the first interface, the first accessory device output. The first primary model input may be based on the first accessory device output.

In one or more example hearing systems, the hearing device is configured to transmit, via the first interface, a first hearing device output based on the first primary model output.

In one or more example hearing systems, the accessory device is configured to receive, via the second interface, the first hearing device output. The second model input is optionally based on the first hearing device output.

A transmission of data from the hearing device to the accessory device provides a means for feedbacking data to the one or more processors in the accessory device. In turn, the second, or other, models of the accessory device may be modified or improved, as described herein. The data (for example, the first hearing device output) may be used in training the second model, or used in another way by the accessory device.

In one of more example hearing systems, the accessory device comprises a microphone for provision of a microphone input signal. In one or more examples, the second model input comprises the microphone input signal and the second model output is based on the microphone input signal. The microphone may be denoted a second sensor as described herein.

In one or more example hearing systems, the second machine learning model is or comprises a sensor model for provision of an sensor model output based on the microphone input signal(s). The second model output is based on the sensor model output.

In one of more example hearing systems, the accessory device comprises a camera for provision of image data. The second model input may comprise the image data, and optionally the second model output is based on the image data. The camera may be denoted a first sensor as described herein.

In one of more example hearing systems, the second machine learning model comprises an image model for provision of an image model output. The image model output may be based on the image data. The second model output may be based on the image model output. In other words, the second machine learning model may be an image model.

In one or more example hearing systems, the accessory device comprises a lidar for provision of a lidar input signal. The second model input may comprise the lidar input signal, and optionally the second model output is based on the lidar input signal. The lidar sensor may be denoted a third sensor as described herein. In other words, the second machine learning model may be a lidar model.

In one or more example hearing systems, the accessory device comprises an accelerometer or motion sensor for provision of an acceleration input signal. The second model input may comprise the acceleration input signal, and optionally the second model output is based on the acceleration input signal. The accelerometer/motion sensor may be denoted a third sensor as described herein.

In one or more example hearing systems, the accessory device comprises a radar for provision of a radar input signal. The second model input may comprise the radar input signal, and optionally the second model output is based on the radar input signal. The radar may be denoted a first sensor or a third sensor as described herein. In other words, the second machine learning model may be a radar model.

In one or more example hearing systems, the hearing device comprises a first microphone for provision of a first microphone input signal. The first model input may comprise the first microphone input signal, and optionally the first model output is based on the first microphone input signal.

It is noted that descriptions and features of hearing device functionality, such as hearing device configured to, also apply to methods and vice versa. For example, a description of a hearing device configured to determine also applies to a method, e.g. of operating a hearing device, wherein the method comprises determining and vice versa.

Further, descriptions and features of accessory device functionality, such as accessory device configured to, also apply to methods and vice versa. For example, a description of an accessory device configured to determine also applies to a method, e.g. of operating a accessory device, wherein the method comprises determining and vice versa.

The present disclosure relates to a computer-implemented method for training a first machine learning, ML, model of a hearing device. The method comprises obtaining a training dataset. The training dataset comprises an audio sensor training dataset, a model output training dataset, and a target output signal. The audio training dataset comprises one or more microphone input signals including a first microphone input signal and/or a second microphone input signal. The model output training dataset comprises second model output of a second machine learning model. In one or more examples, the first microphone input signal and/or the second microphone input signal may be received from one or more microphones of the hearing device. In one or more examples, the first microphone input signal may be received from one or more microphones of a connected hearing device, for example, another hearing device communicatively connected, e.g. as part of a binaural hearing system. In one or more examples, the first microphone input signal may be received from one or more interfaces of an accessory device, for example, the accessory device discussed herein, or another device.

In one or more examples, the method comprises applying the audio training dataset and the model output training dataset as respective inputs to the first machine learning model.

In one or more examples, the method comprises training the first machine learning model based on a first model output and the target output signal.

In one or more examples, the target output signal for the first machine learning model and/or the first secondary machine learning model may be an audio signal such as a clean speech signal. The ML model may be trained to provide an ML model output which can transform the first model output to be closer to the target audio signal. The target output signal for the first machine learning model and/or the first primary machine learning model may be a controller output.

Further, the present disclosure relates to a computer-implemented method for training a second machine learning model of an accessory device. The method comprises obtaining a training dataset. In one or more examples, the training dataset comprises a sensor training dataset, optionally a model output training dataset, and a target output signal. In examples, the sensor training dataset comprises one or more sensor input signals optionally including a first microphone input signal. In one or more examples, the first microphone input signal can be received from a number of sources, as described herein. The model output training dataset may comprise a first model output of a first machine learning model e.g. of a hearing device.

In examples, the method further comprises applying the sensor training dataset and/or the model output training dataset as respective inputs to the second machine learning model.

In examples, the method further comprises training the second machine learning model based on a second model output and the target output signal.

The target output signal for the second machine learning model may be a first model input A hearing device is disclosed. The hearing device comprises an interface and one or more processors. The one or more processors comprise a first primary machine learning model and/or a first secondary machine learning model. The first primary machine learning model is for provision of a first primary model output. The first primary model output is based on a first primary model input. In one or more example hearing devices, the first primary model input may optionally be received from one or more microphones of the hearing device. In one or more examples, the first primary model input may optionally be received from one or more microphones of a hearing device communicatively coupled to the claimed hearing device, for example, as part of a binaural hearing system, as described herein.

In one or more examples, the first secondary machine learning model is for provision of a first secondary model output. The first secondary model output is based on a first secondary model input. The first secondary model input may be based on the first primary model output. In other words, the first primary model output may be fed at least as part of the first secondary model input.

In one or more examples, the first primary model input is based on the first secondary model output. In other words, the first secondary model output may be fed at least as part of the first primary model input. Thus, a feedback from the first secondary ML model to the first primary ML model may be implemented.

In one or more example hearing devices, the hearing device comprises a first microphone for provision of a first microphone input signal. The first secondary model input may comprise the first microphone input signal and the first secondary model output is optionally based on the first microphone input signal. In one or more examples, an additional secondary model input to the first secondary ML model, e.g., a second secondary model input, comprises a second microphone input signal. This second microphone input signal may be from a second microphone, e.g. of the hearing device disclosed. The second microphone may also be from another hearing device, or from an accessory device, as described herein. Thus, first microphone input signal from a first microphone and/or second microphone input signal from a second microphone may be fed as at least a part of the first secondary model input.

In one or more example hearing devices, the first primary model input comprises the first microphone input signal. The first primary model output may be based on the first microphone input signal. The first primary model input may comprise the second microphone input signal, and the first primary model output is optionally based on the second microphone input signal. Thus, first microphone input signal from a first microphone and/or second microphone input signal from a second microphone may be fed as at least a part of the first primary model input.

In one or more example hearing devices, the first primary machine learning model comprises a noise model for provision of a noise model output, e.g. based on the first microphone input signal and/or the second microphone input signal. The first primary model output may be based on the noise model output.

In one or more example hearing devices, the first primary machine learning model comprises a voice model for provision of a voice model output based on the first microphone input signal and/or the second microphone input signal. The first primary model output may be based on the voice model output. In one or more examples, the voice model is based on the first primary model input, e.g. where the first primary model input or at least a part thereof originates from a spouse device or an accessory device.

In one or more example hearing devices, the first primary machine learning model comprises a gain model for provision of a gain model output based on the first microphone input signal and/or the second microphone input signal. The first primary model output may be based on the gain model output.

In one or more example hearing devices, the first secondary machine learning model comprises a beamforming model for provision of a beamforming model output. The beamforming model output is based on the first microphone input signal and/or the second microphone input signal. The first primary model output may be based on the beamforming model output.

A computer-implemented method for training a first primary machine learning model of a hearing device is disclosed, the method comprising obtaining a training dataset comprising an audio training dataset and/or a model output training dataset, and a target output signal, the audio training dataset comprising one or more microphone input signals including a first microphone input signal and/or a second microphone input signal, and the model output training dataset comprising first secondary model output of a first secondary machine learning model; applying the audio training dataset and/or the model output training dataset as respective inputs to the first primary machine learning model for provision of a first primary model output; and training the first primary machine learning model based on the first primary model output and the target output signal.

A computer-implemented method for training a first secondary machine learning model of a hearing device, the method comprising obtaining a training dataset comprising an audio training dataset and/or a model output training dataset, and a target output signal, the audio training dataset comprising one or more microphone input signals including a first microphone input signal and/or a second microphone input signal, and the model output training dataset comprising first primary model output of a first primary machine learning model; applying the audio training dataset and/or the model output training dataset as respective inputs to the first secondary machine learning model for provision of a first secondary model output; and training the first secondary machine learning model based on the first secondary model output and the target output signal.

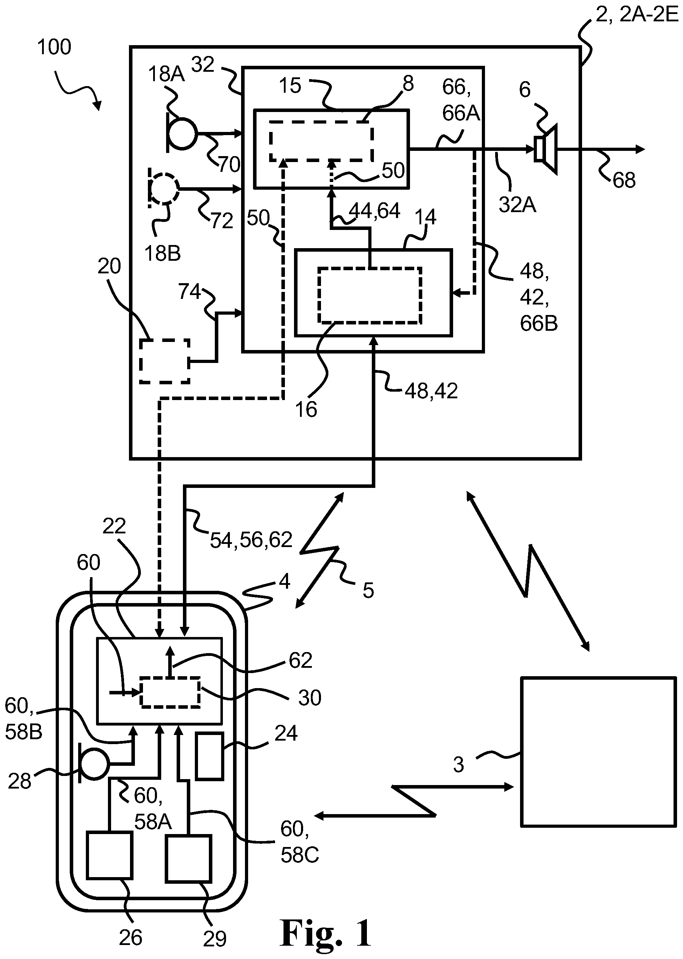

Fig. 1 schematically illustrates an example hearing system 100 according to the disclosure. The example hearing system 100 comprises one or more hearing devices 2, 2A, 2B, 2C, 2D, 2E and an accessory device 4. The hearing system 100 may also comprise a server device 3, as discussed herein. The devices, e.g., hearing device 2, 2A-2E, the server device 3, and/or the accessory device 4, may communicate input/output, such as 54, 56, 62, over a wired or wireless connection, for example, using a wireless communication signal 5. The devices may communicate in another way, as described herein. In the following, a reference to hearing device 2 is a reference to any of hearing devices 2, 2A, 2B, 2C, 2D, 2E.

In one or more examples, the hearing device 2 may be a hearing aid, where the hearing device 2 comprises a processor 32, and the processor 32 comprises one or more processors, such as audio processor 15, and/or controllers, such as controller 14. The hearing device comprises an interface including a wireless transceiver (not shown), also denoted as a radio transceiver, and an antenna. The interface is configured for wireless transmission and/or reception of wireless signals, e.g. for wireless communication with one or more accessory devices 4, as discussed above, and/or another hearing device. The hearing device 2 comprises one or more microphones including a first microphone 18A and optionally second microphone 18B. One or both of microphones 18 (18A, 18B) may be omitted. The hearing device 2 comprises a receiver 6 for converting an electrical output signal 32A from the processor 32 to an audio output 68. The receiver 6 may receive, from an audio processor 15, audio processor output 66A as the electrical output signal 32A . The receiver 6 converts the electrical output signal 32A to audio output 68 also denoted hearing device output.

In one or more examples, the hearing device 2/processor 32 may comprise a controller 14. The controller 14 may comprise one or more machine learning (ML) models, for example, a first primary ML model 16, as illustrated at Fig. 1. The first primary ML model 16 is also denoted first ML model. The controller 14, such as the first (primary) ML model 1, may be configured to receive input from one or more sensors, for example, sensor 20, from the one or more microphones 18A, 18B, from the accessory device 4, or from other sources. The processor 32 may further comprise one or more ML models outside of the controller 14, for example first secondary ML model 8, e.g. as part of audio processor 15. The module(s) for first primary ML model 16 and/or first secondary ML model 8 may be configured to receive, transmit or process data from one or more sources depicted or described herein. It is noted here that the arrows included here are examples only and are not restrictive, but rather illustrative of example configurations.

The one or more microphones 18A, 18B may be configured to feed output (e.g., microphone input signal 70 and/or 72) to elements within the one or more processors 32. For example, the first microphone input signal 70 and/or the second microphone input signal 72, and/or pre-processed versions thereof, may be received by the audio processor 15, such as the first secondary machine learning model 8 of the audio processor 15. The audio processor 15, such as the first secondary machine learning model 8, may be configured to receive as audio processor input 64, e.g., first secondary machine learning model input 50, one or more of: accessory device output 56 from accessory device 4, controller output 44 from controller 14, first primary machine learning model output 64 from first primary machine learning model 16, sensor output 74 from sensor 20), and output from additional sources.

The controller 14, such as the first primary machine learning model 16, as discussed herein, may be configured to receive as input controller input 48 and/or first primary machine learning model input 42, such as output from one or more sources including: micophones 18A, 18B, sensors, such as sensor 20, accessory device 4, audio processor 15, such as first secondary ML 8. In other words, the input 48 to controller 14, such as first primary model input 42 to first primary machine learning model 16, may comprise one or more of accessory device output 56, such as second model output 62, first microphone input signal 70, second microphone input signal 72, second primary machine learning model output 66B.

The accessory device 4 comprises a processing unit including processor 22 and interface 24. The processor 22 may comprise a second ML model 30 for provision of second model output 62 based on second model input 60. The accessory device 4 is configured to transmit, via the interface, a first accessory device output 56 based on or inclusive of the second model output 62. The hearing device 2 is configured to receive the first accessory device output 56 from the accessory device 4 via wireless connection 5. The first primary model input 42 is optionally based on the first accessory device output 56. In examples, the accessory device 4 comprises one or more sensors 26, 28, 29. The output of these sensors, such as sensor output 58A, 58B, 58C, may be input to the processor, such as second model input 60 to the second machine learning model 30. The first sensor 26 may be an image sensor, and the first sensor output 58A may be image data. The second sensor 28 may be an accessory device microphone, and the second sensor output 58B may be a microphone input signal. The third sensor 29 may be a motion sensor or a lidar sensor, and the third sensor output may be motion data or lidar data.

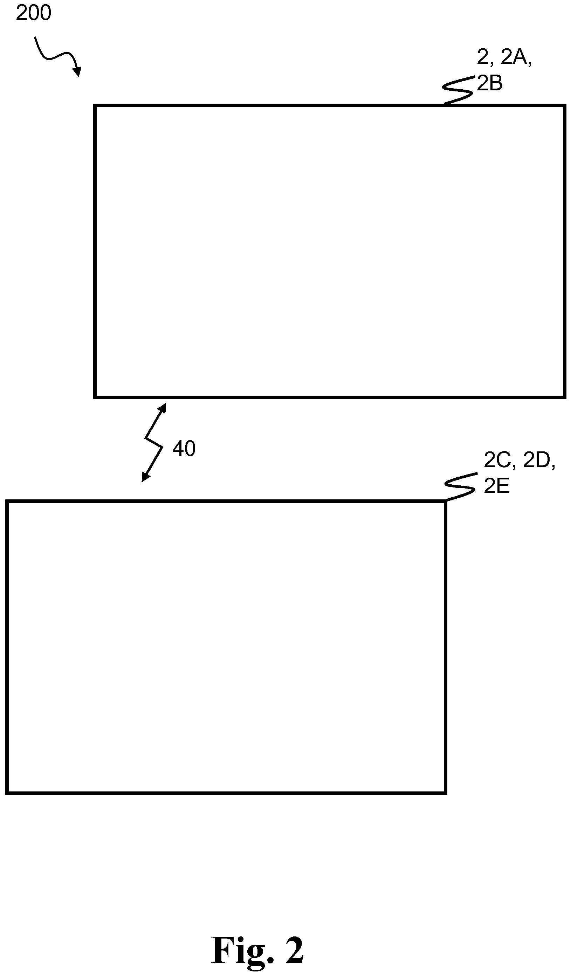

Fig. 2 schematically illustrates example system 300 for a binaural hearing setup, including a set of hearing aids. The hearing aid may be a binaural hearing aid. In one or more examples, hearing aids 2, 2A, and 2B may have the same or mirrored configuration as hearing aids 2C and 2D. In other examples, hearing aids 2, 2A, and 2B may have different configurations than their corresponding hearing aids, for example, 2C and 2D. In embodiments, the two devices (2, 2A and 2B) and (2C, 2D, 2E) may be configured to communicate in a wired or wireless manner, as described herein.

For example, the first hearing device 2 and the second hearing device 2C, 2D are configured to communicate via wireless bi-lateral communication 40, e.g. for exchange, via respective interfaces, of one or more control signals or messages between the first hearing device 2 and the second hearing device 2C, 2D, 2E.

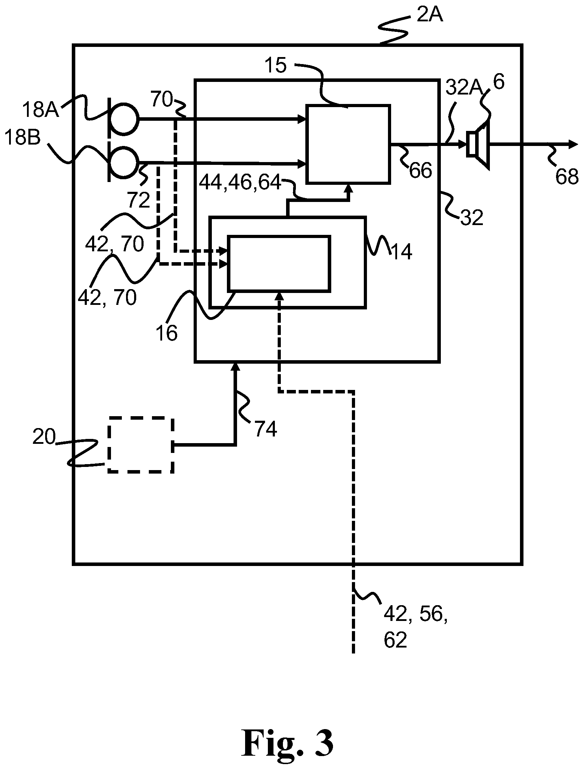

Figs. 3-7 schematically illustrate one or more example hearing device 2(A-E). Hearing device 2 may be an example of the one or more hearing devices in the hearing system 100, for example hearing system 100 of Fig. 2. Said differently, the hearing device 2 in Fig. 1 may have the configuration of any of 2A-2E, or another configuration entirely.

Hearing device 2A of Fig. 3 comprises a processor 32. Processor 32 may comprise one or more controllers, for example controller 14. For clarity, processor 32 may comprise additional modules or elements not included in this or other figures. Controller 14 may comprise one or more machine learning modules, here a first primary machine learning model 16. Either or both of the controller 14 and the machine learning model 16 may be configured to receive input from one or more microphones, for example, microphones 18A and 18B, as depicted herein at 70 and 72, or from one or more sensors, for example sensor 20, as depicted at 74. The controller 14 and first primary model 16 of the hearing device 2A may further be configured to receive input directly from a contralateral or partner hearing device, for example, as depicted in Fig. 2. Hearing device 2A may further comprise a receiver 6. Microphones 18 (18A, 18B) may each feed microphone input signal 70, 72 respectively, to an audio processor 15 of processor 32. In one or more examples, the controller output 46 may optionally comprise the first primary model output 44. The controller output 44 may be received as audio processor input 64 by the audio processor 15. In examples, microphone input signals 70, 72 may also be received as audio processor input to the audio processor 15. The audio processor 15 may perform any number of signal processing activities, such as one or more of beamforming, noise reduction, feedback cancellation, and hearing compensation, before providing audio processor output 66 as electrical output signal 32A to the receiver 6, to convert and transmit as hearing device output 68. As described herein, hearing device 2A may also comprise an interface/wireless communication unit (not depicted herein) also denoted first interface, which may include, among other elements, a transceiver and an antenna.

The hearing device 2A may be configured to receive, via the first interface (not shown) of hearing device 2A, a first accessory device output 56, and wherein the first primary model input to first primary ML model 16 is optionally based on first accessory device output 56.

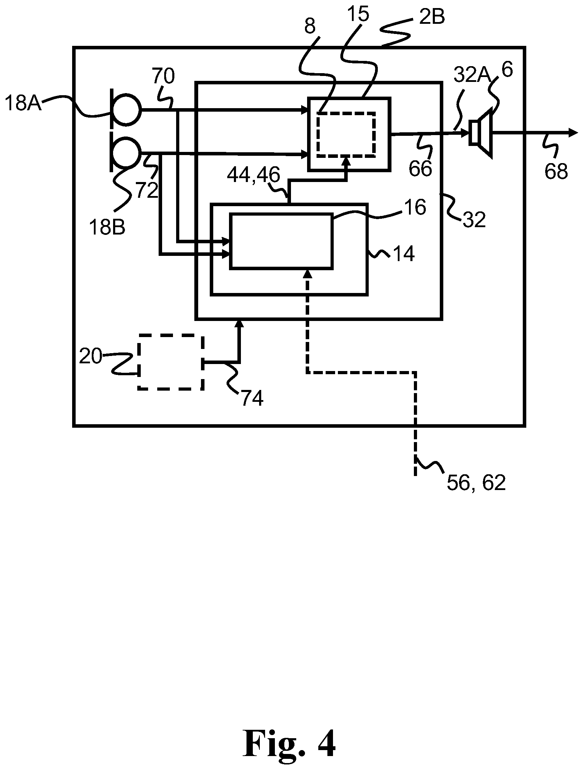

Fig. 4 shows a hearing device 2B comprising a processor 32. Processor 32 may comprise one or more controllers, such as controller 14. For clarity, processor 32 may comprise additional modules or elements not included in this or other figures. Controller 14 may comprise or implement one or more machine learning models, here a first primary machine learning model 16. Either or both of the controller 14 and the first primary machine learning model 16 may be configured to receive input from one or more microphones, for example, microphones 18A and 18B, as depicted herein at 70 and 72, or from one or more sensors, for example sensor 20, as depicted at 74. The controller 14, such as first primary model 16, of the hearing device 2A may further be configured to receive input directly from a contralateral hearing device, for example, as depicted in Fig. 3, and/or an accessory device 4. Hearing device 2B may further comprise a receiver 6. Microphones 18 (18A, 18B) may each feed microphone input signal 70 and 72, respectively, to an audio processor 15. In examples, the controller output 46 may optionally comprise the first primary model output 44. The controller output 46 may be received as audio processor input 64 by the audio processor 15.

In one or more examples, the audio processor 15 may comprise or implement one or more machine learning models. For example, a first secondary machine learning model 8 is shown herein. Either or both of the audio processor 15 and the first secondary model 8 may be configured to receive input from one or more microphones (e.g., microphones 18A and 18B, as depicted at 70 and 72, respectively). Responsive to the controller output 46 and/or additional inputs, the audio processor 15 may process the received data and provide audio processor output 66, e.g. to the receiver 6 as electrical output signal 32A. As described herein, the receiver 6 may convert the electrical signal output to audio output and provide as hearing device output 68.

As described herein, hearing device 2B may also comprise an interface/wireless communication unit (not depicted herein) also denoted first interface which may include, among other elements, a transceiver and an antenna. The hearing device 2B may be configured to receive, via the first interface of hearing device 2B, a first accessory device output 56, and wherein the first primary model input to first primary ML model 16 and/or the first secondary input model input to the first secondary model 8 is optionally based on first accessory device output 56.

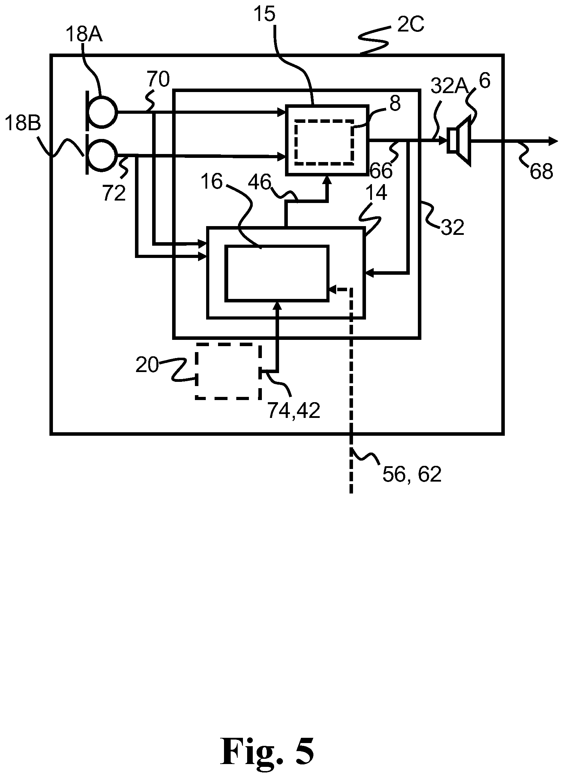

Fig. 5 shows a hearing device 2C comprising a processor 32. Processor 32 may comprise one or more controllers, for example controller 14. For clarity, processor 32 may comprise additional modules or elements not included in this or other figures. Controller 14 may comprise or implement one or more machine learning models, here a first primary machine learning model 16. Either or both of the controller 14 and the first primary machine learning model 16 may be configured to receive input from one or more microphones, for example, microphones 18A and 18B, as depicted herein at 70 and 72, or from one or more sensors, for example sensor 20, as depicted at 74. The sensor data from sensor 20 may additionally or alternatively understood as first primary model input 42. The controller 14 and first primary ML model 16 of the hearing device 2A may further be configured to receive input directly from a partner hearing device, for example, as depicted in Fig. 2. Hearing device 2B may further comprise a receiver 6. Microphones 18 (18A, 18B) may each transmit output at 70 and 72, respectively, to an audio processor. In examples, the controller output 46 may optionally comprise the first primary model output (e.g., first primary model output 44 as illustrated at, e.g., Figs. 3 and 4). The controller output 46 may be received as audio processor input 64 by the audio processor 15.

In one or more examples, the audio processor 15 may comprise one or more machine learning modules. For example, a first secondary machine learning model 8 is shown herein. Either or both of the audio processor 15 and the first secondary model 8 may be configured to receive input from one or more microphones (e.g., microphones 18A and 18B, as depicted at 70 and 72, respectively). Responsive to the controller output 46 and/or additional inputs, the audio processor may process the received data and transmit it (e.g., audio processor output 66) to the receiver 6. As described herein, the receiver 6 may convert the electrical signal output to audio and transmit as hearing device output 68. The audio processor 66 may additionally or alternatively in some instances provide audio processor output 66 to the controller 14 (e.g., to the first primary machine learning model 16). In other words, the audio processor (e.g., first secondary machine learning model 8) may provide feedback to the controller.

As described herein, hearing device 2C may also comprise an interface/wireless communication unit (not depicted herein) also denoted first interface which may include, among other elements, a transceiver and an antenna. The hearing device 2C may be configured to receive, via the first interface of hearing device 2C, a first accessory device output 56, and wherein the first primary model input to first primary ML model 16 and/or the first secondary input model input to the first secondary model 8 is optionally based on the first accessory device output 56.

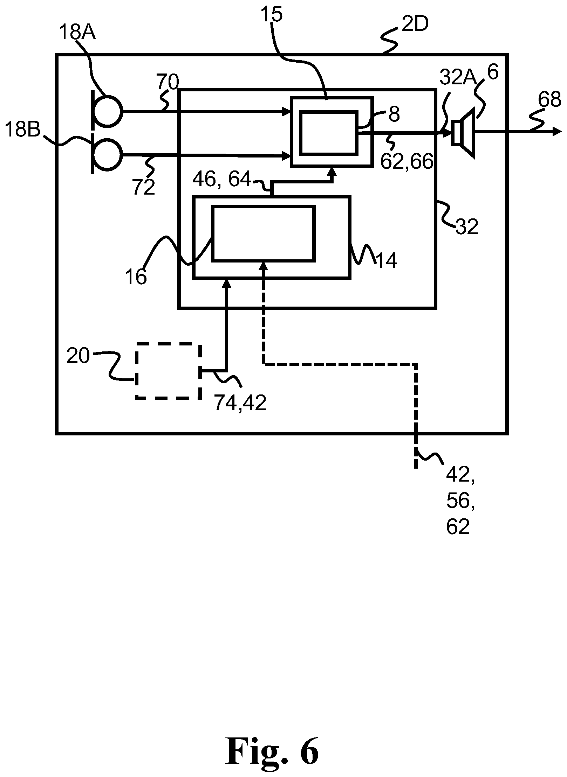

Fig. 6 shows a hearing device 2D comprising a processor 32. Processor 32 may comprise one or more controllers, for example controller 14. For clarity, processor 32 may comprise additional modules or elements not included in this or other figures. The sensor data from sensor 20 may be understood as first primary model input 42 to the first primary ML model 16 and/or sensor output 74. The controller 14 and first primary model 16 of the hearing device 2D may further be configured to receive input directly from a partner hearing device, for example, as depicted in Fig. 2. Hearing device 2D may further comprise a receiver 6. Microphones 18 (18A, 18B) may each transmit output at 70 and 72, respectively, to an audio processor 15. In examples, the controller output 46 may optionally comprise or be based on a machine learning model output, such as first primary model output 44 as illustrated at, e.g., Figs. 3 and 4. The controller output 46 may be received as audio processor input 64 by the audio processor 15. The controller output 46 in hearing device 2D, as well as any of hearing devices 2A, 2B, 2C, may be based on, e.g. comprise or be a functions of, the first primary model output of first primary ML model 16.

In one or more examples, the audio processor 15 may comprise one or more machine learning models. For example, a first secondary machine learning model 8 is shown herein. Either or both of the audio processor 15 and the first secondary model 8 may be configured to receive input from one or more microphones (e.g., microphones 18A and 18B, as depicted at 70 and 72, respectively). Responsive to the controller output 46 and/or additional inputs, the audio processor 15, such as first secondary machine learning model 8, may process the received data and transmit it (e.g., audio processor output 66) to the receiver 6. As described herein, the receiver 6 may convert the electrical signal output to audio and transmit as hearing device output 68.

As described herein, hearing device 2D may also comprise an interface/wireless communication unit (not depicted herein) also denoted first interface which may include, among other elements, a transceiver and an antenna. The hearing device 2D may be configured to receive, via the first interface of hearing device 2D, a first accessory device output 56, and wherein the first primary model input to first primary ML model 16 and/or the first secondary input model input to the first secondary model 8 is optionally based on the first accessory device output 56.

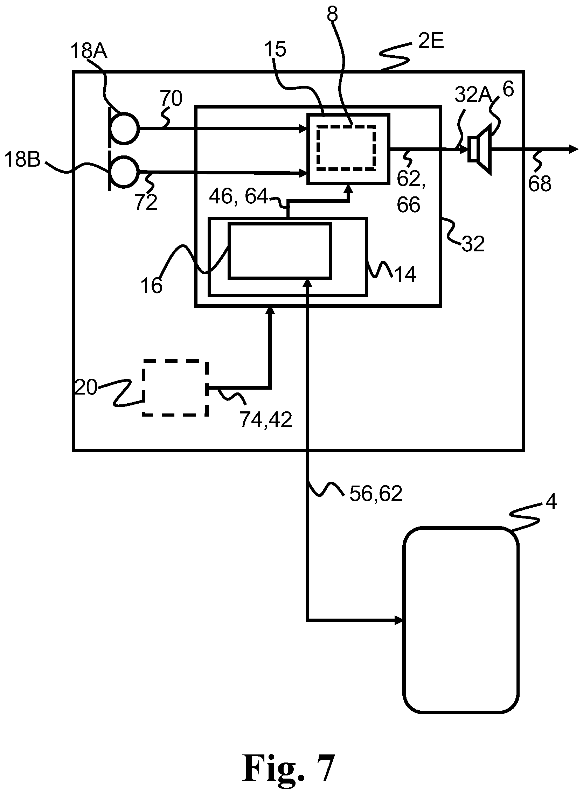

Fig. 7 shows a hearing device 2E comprising a processor 32. Processor 32 may comprise one or more controllers, for example controller 14. For clarity, processor 32 may comprise additional modules or elements not included in this or other figures. The sensor data from sensor 20 may be understood as first primary model input 42 and/or sensor output 74. The controller 14 and first primary model 16 of the hearing device 2A may further be configured to receive input directly from a contralateral/partner hearing device, for example, as depicted in Fig. 2.

Hearing device 2E may be configured to receive data from one or more accessory devices, as described herein, e.g., accessory device 4 of Fig. 1. In one or more examples, accessory device 4 may comprise one or more processors, one or more sensors, one or more machine learning models (e.g., the second machine learning model 30 as described in Fig. 1). The first accessory device output 56 (e.g., second machine learning model output 62) may be received as input by the hearing device (e.g., via the interface and to the one or more processors 32). In examples, the hearing device 2E may provide input to the accessory device 4, for example, to assist in the training of the one or more machine learning models of the accessory device (e.g., the second ML model 30, of Fig. 1).

Hearing device 2E may further comprise a receiver 6. Microphones 18 (18A, 18B) may each transmit output at 70 and 72, respectively, to an audio processor 15. In examples, the controller output 46 may optionally comprise a machine learning model output (e.g., first primary model output 44 as illustrated at, e.g., Figs. 3 and 4). The controller output 46 may be received as audio processor input 64 by the audio processor 15.

In examples, the audio processor 15 may comprise or implement one or more machine learning models. Though none are depicted in Fig. 4E, the audio processor 15 may comprise one or more models, e.g., a first secondary machine learning model 8 as shown in Figs. 3-6. The audio processor 15 may be configured to receive input from one or more microphones (e.g., microphones 18A and 18B, as depicted at 70 and 72, respectively). Responsive to the controller output 46 and/or additional inputs, the audio processor may process the received data 70, 72 and transmit audio processor output 66A also denoted electrical output signal to the receiver 6. As described herein, the receiver 6 may convert the electrical output signal to audio and transmit as hearing device output 68.

As described herein, hearing device 2E may also comprise an interface/wireless communication unit (not depicted herein) also denoted first interface which may include, among other elements, a transceiver and an antenna. The hearing device 2E is may be configured to receive, via the first interface of hearing device 2D, a first accessory device output 56, and wherein the first primary model input to first primary ML model 16 and/or the first secondary input model input to the first secondary model 8 is optionally based on the first accessory device output 56.

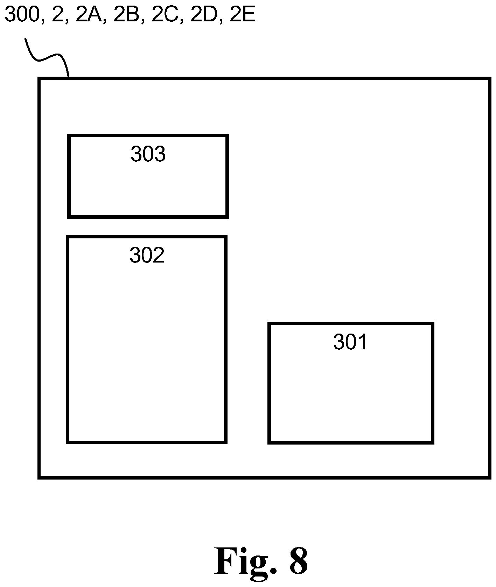

Fig. 8 schematically illustrates one or more example hearing devices 300 according to the disclosure. The hearing device 300 comprises memory circuitry 301, processor circuitry 302, such as processor 32, and an interface 303. The interface 303 is configured for wired and/or wireless communications via a wired and/or wireless communication system. The hearing device 300 may be configured to perform any of the processes/methods disclosed in the figures (e.g., steps S102, S104 and S106). In other words, the hearing device 300 may be configured to receive machine learning model input from one or more accessory devices and/or for training a machine learning model of the hearing device 300.

Processor circuitry 302 is optionally configured to perform any of the operations described in relation to Figs. 1-7.

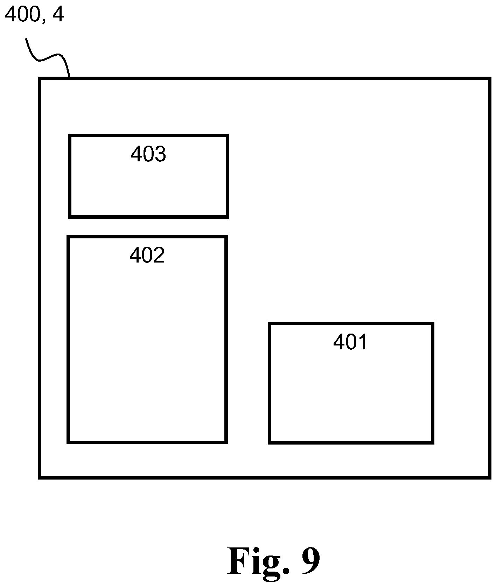

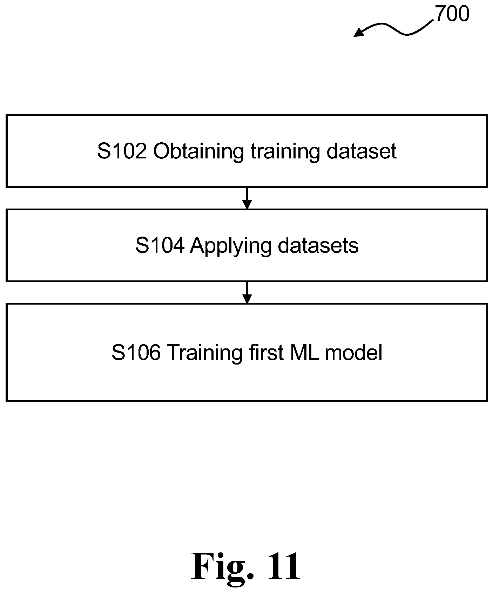

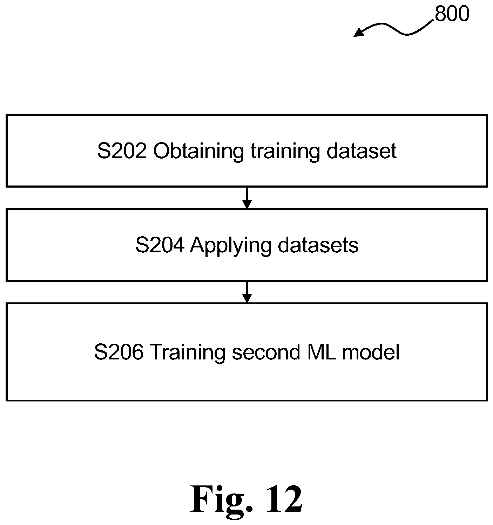

Fig. 9 shows a block diagram of an example accessory device 400 according to the disclosure. The accessory device 400 comprises memory circuitry 401. The accessory device 400 comprises processor circuitry 402, such as processor 22. The accessory device 400 comprises an interface 403. The accessory device 400 may be configured to perform any of the methods disclosed in Fig. 11/12. The accessory device 400 may be configured as described in Fig. 1. In other words, the accessory device 400 may be configured for training machine learning models and transmitting output.

The accessory device 400 is configured to communicate with a hearing device, such as hearing device disclosed herein, for example, in the hearing system depicted at Figs. 1, 2. The interface 403 is configured for wired and/or wireless communications via a wired or wireless communication system.

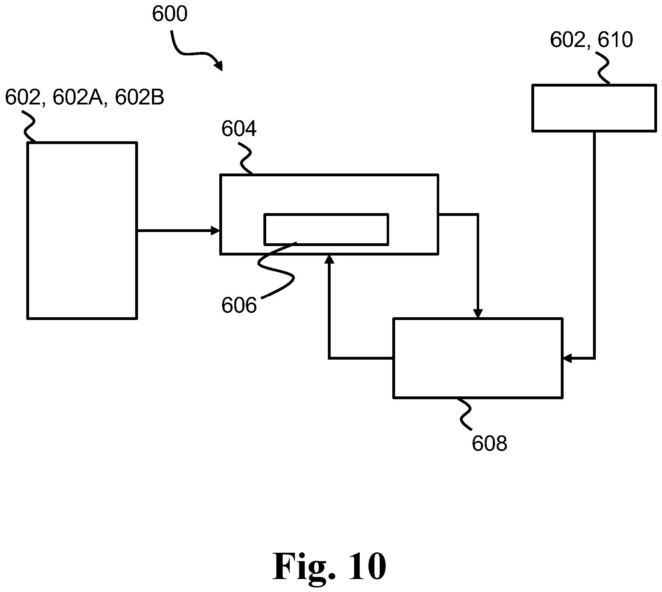

Fig. 10 shows a block diagram of an example training system 600 for training a machine learning model, e.g., first ML model, first primary ML model 16, and first secondary ML model 8, of hearing device 2, 2A-2F.

In one or more examples, the training system 600 may optionally be part of or implemented in an accessory device, e.g., accessory device 4, a server device, or a computing device. The training system 600 comprises or is configured to obtain/receive training dataset 602 comprising audio training dataset 602A, optionally a model output training dataset 602B, and a target output signal 610. The training system 600 comprises a training module 604 comprising a deep neural network architecture 606 implementing first ML model, first primary ML model and/or first secondary ML model. The training system 600 comprises a cost function module 608 comprising a cost function. The training module 604 is configured to receive the audio training dataset 602A and optionally a model output training dataset 602B and determine one or more of a first model output, first primary model output and a first secondary model output by applying the respective model to be trained. The training module 604 outputs the determined model output, such as first model output, first primary model output and/or first secondary model output to the cost function module 608. The cost function module 608 is configured to obtain the target output signal 610 and one or more of first model output, first primary model output and first secondary model output from the training module 604, and based on the model output and the target output signal 610, the cost function module 608 provides feedback to the training module 604. The trained deep neural network 606 may be implemented in a hearing device and used for audio processing in a hearing device as described herein.

Fig. 11 is a flow diagram of an example method 700 for training a machine learning model of a hearing device. The method 700 is a computer-implemented method for training a first machine learning model of a hearing device, and may be performed by a training system as in Fig. 10.

The method 700 comprises obtaining S102 a training dataset. In one or more examples, the training dataset may comprise an audio training dataset. The training dataset may optionally include a model output training dataset and a target output signal. The audio training dataset may comprise a first microphone input signal and/or a second microphone input signal from one or more microphones including a first microphone and/or a second microphone. The model output training dataset may comprise a second model output of a second machine learning model e.g. of an accessory device.

The method 700 comprises applying S104 datasets to the model. In one or more examples, applying the datasets may comprise applying the audio training dataset and/ the model output training dataset as respective inputs to the first ML model, e.g. for provision of the first model output.

The method 700 comprises training S106 the first ML model. In one or more examples, the training may comprise training the first machine learning model based on the first model output and the target output signal.

Fig. 12 is a flow diagram of an example method 800 for training a second machine learning model of an accessory device of a hearing system. The method 800 may be performed by a training system.

The method 800 comprises obtaining S202 a training dataset. In one or more example, the training dataset may comprise a sensor training dataset with sensor data from one or more sensors. In examples, the sensor data may comprise sensor output from one or more of a microphone, an image sensor, and a motion sensor of the accessory device. The training dataset may optionally include a model output training dataset and/or a target output signal. The sensor training dataset may comprise one or more of a microphone input signal from one or more microphones including a first microphone, image data from an image sensor of an accessory device, motion data from a motion sensor of an accessory device, a lidar sensor of an accessory device, and a radar sensor of an accessory device. The model output training dataset may comprise a first model output of a first machine learning model of a hearing device. The target output signal may comprise second model output data used for training a first model of a hearing device.

The method 800 comprises applying S204 datasets including training data set to the model. In one or more examples, applying the datasets may comprise applying the sensor training dataset and optionally the model output training dataset as respective inputs to the second ML model, e.g. for provision of the second model output.

The method 800 comprises training S206 the second ML model. In one or more examples, the training may comprise training the second machine learning model based on the second model output and the target output signal.

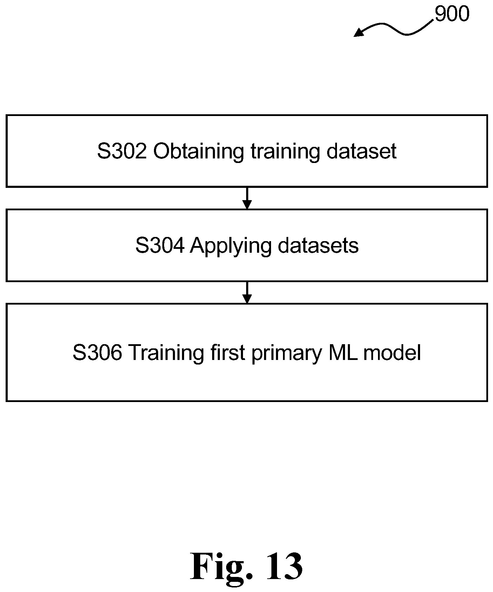

Fig. 13 is a flow diagram of an example method 900 for training a machine learning model of a hearing device. The method 900 is a computer-implemented method for training a first primary machine learning model of a hearing device, and may be performed by a training system as in Fig. 10.

The method 900 comprises obtaining S302 a training dataset comprising an audio training dataset and/or a model output training dataset, and a target output signal, the audio training dataset comprising one or more microphone input signals including a first microphone input signal and/or a second microphone input signal, and the model output training dataset comprising first secondary model output of a first secondary machine learning model; applying S304 the audio training dataset and/or the model output training dataset as respective inputs to the first primary machine learning model for provision of a first primary model output; and training S306 the first primary machine learning model based on the first primary model output and the target output signal.

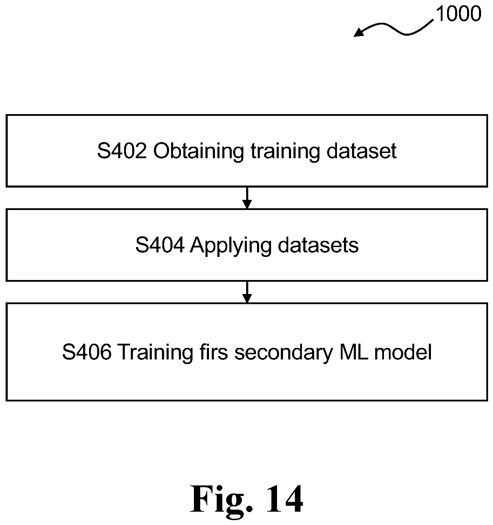

Fig. 14 is a flow diagram of an example method 100 for training a machine learning model of a hearing device. The method 1000 is a computer-implemented method for training a first secondary machine learning model of a hearing device, and may be performed by a training system as in Fig. 10.

The method 1000 obtaining S402 a training dataset comprising an audio training dataset and/or a model output training dataset, and a target output signal, the audio training dataset comprising one or more microphone input signals including a first microphone input signal and/or a second microphone input signal, and the model output training dataset comprising first primary model output of a first primary machine learning model and/or second model output of a second machine learning model; applying S404 the audio training dataset and/or the model output training dataset as respective inputs to the first secondary machine learning model for provision of a first secondary model output; and training S406 the first secondary machine learning model based on the first secondary model output and the target output signal.

Examples of audio devices, systems and related methods according to the disclosure are set out in the following items:
Item 1. A hearing system comprising a hearing device and an accessory device, the hearing device comprising a first interface and one or more processors comprising a first primary machine learning model for provision of a first primary model output based on a first primary model input, the accessory device comprising a second interface and one or more processors comprising a second machine learning model for provision of a second model output based on a second model input, wherein the accessory device is configured to transmit, via the second interface, a first accessory device output based on the second model output, and wherein the hearing device is configured to receive, via the first interface, the first accessory device output, and wherein the first primary model input is based on the first accessory device output.
Item 2. Hearing system according to item 1, wherein the hearing device is configured to transmit, via the first interface, a first hearing device output based on the first primary model output, and wherein the accessory device is configured to receive, via the second interface, the first hearing device output, and wherein the second model input is based on the first hearing device output.
Item 3. Hearing system according to any one of items 1-2, wherein the accessory device comprises a microphone for provision of a microphone input signal, the second model input comprising the microphone input signal, and wherein the second model output is based on the microphone input signal.
Item 4. Hearing system according to item 3, wherein the second machine learning model comprises an sensor model for provision of an sensor model output based on the microphone input signal, and wherein the second model output is based on the sensor model output.
Item 5. Hearing system according to any one of items 1-4, wherein the accessory device comprises a camera for provision of image data, the second model input comprising the image data, and wherein the second model output is based on the image data.
Item 6. Hearing system according to item 5, wherein the second machine learning model comprises an image model for provision of an image model output based on the image data, and wherein the second model output is based on the image model output.
Item 7. Hearing system according to any one of items 1-6, wherein the accessory device comprises a lidar for provision of a lidar input signal, the second model input comprising the lidar input signal, and wherein the second model output is based on the lidar input signal.
Item 8. Hearing system according to any one of items 1-7, wherein the accessory device comprises an accelerometer for provision of an acceleration input signal, the second model input comprising the acceleration input signal, and wherein the second model output is based on the acceleration input signal.
Item 9. Hearing system according to any one of items 1-8, wherein the accessory device comprises a radar for provision of a radar input signal, the second model input comprising the radar input signal, and wherein the second model output is based on the radar input signal.
Item 10. Hearing system according to any one of items 1-9, wherein the hearing device comprises a first microphone for provision of a first microphone input signal, the first primary model input comprising the first microphone input signal, and wherein the first primary model output is based on the first microphone input signal.
Item 11. A computer-implemented method for training a first machine learning model of a hearing device, the method comprising:
   obtaining a training dataset comprising an audio training dataset, a model output training dataset, and a target output signal, the audio training dataset comprising one or more microphone input signals including a first microphone input signal, and the model output training dataset comprising second model output of a second machine learning model;
   applying the audio dataset and the model output training dataset as respective inputs to the first machine learning model for provision of a first model output; and
   training the first primary machine learning model based on the first model output and the target output signal.
Item 12. A computer-implemented method for training a second machine learning model of an accessory device, the method comprising:
   obtaining a training dataset comprising a sensor training dataset, a model output training dataset, and a target output signal, the sensor training dataset comprising one or more input signals from one or more sensors, respectively, and the model output training dataset comprising first model output of a first machine learning model;
   applying the sensor training dataset and the model output training dataset as respective inputs to the second machine learning model for provision of a second model output; and
   training the second machine learning model based on the second model output and the target output signal.
Item 13. A hearing device comprising an interface and one or more processors, the one or more processors comprising a first primary machine learning model and a first secondary machine learning model, the first primary machine learning model for provision of a first primary model output based on a first primary model input, the first secondary machine learning model for provision of a first secondary model output based on a first secondary model input, wherein the first secondary model input is based on the first primary model output.
Item 14. Hearing device according to item 1, wherein the first primary model input is based on the first secondary model output.
Item 15. Hearing device according to any one of items 1-2, wherein the hearing device comprises a first microphone for provision of a first microphone input signal, the first secondary model input comprising the first microphone input signal, and wherein the first secondary model output is based on the first microphone input signal.
Item 16. Hearing device according to item 3, wherein the first primary model input comprises the first microphone input signal, and wherein the first primary model output is based on the first microphone input signal.
Item 17. Hearing system according to any one of items 3-4, wherein the first primary machine learning model comprises a noise model for provision of a noise model output based on the first microphone input signal, and wherein the first primary model output is based on the noise model output.
Item 18. Hearing system according to any one of items 3-5, wherein the first primary machine learning model comprises a voice model for provision of a voice model output based on the first microphone input signal, and wherein the first primary model output is based on the noise model output.
Item 19. Hearing system according to any one of items 3-6, wherein the first primary machine learning model comprises a gain model for provision of a gain model output based on the first microphone input signal, and wherein the first primary model output is based on the gain model output.
Item 20. Hearing system according to any one of items 3-7, wherein the first secondary machine learning model comprises a beamforming model for provision of a beamforming model output based on the first microphone input signal, and wherein the first primary model output is based on the beamforming model output.
Item 21. A computer-implemented method for training a first primary machine learning model of a hearing device, the method comprising:
   obtaining a training dataset comprising an audio training dataset, a model output training dataset, and a target output signal, the audio training dataset comprising one or more microphone input signals including a first microphone input signal and/or a second microphone input signal, and the model output training dataset comprising first secondary model output of a first secondary machine learning model and/or a second model output of a second machine learning model;
   applying the audio training dataset and the model output training dataset as respective inputs to the first primary machine learning model for provision of a first primary model output; and
   training the first primary machine learning model based on the first primary model output and the target output signal.
Item 22. A computer-implemented method for training a first secondary machine learning model of a hearing device, the method comprising:
   obtaining a training dataset comprising an audio training dataset and/or a model output training dataset, and a target output signal, the audio training dataset comprising one or more microphone input signals including a first microphone input signal and/or a second microphone input signal, and the model output training dataset comprising first primary model output of a first primary machine learning model and/ second model output of a second machine learning model;
   applying the audio training dataset and the model output training dataset as respective inputs to the first secondary machine learning model for provision of a first secondary model output; and
   training the first secondary machine learning model based on the first secondary model output and the target output signal.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of', "characterizing", and/or "defining". The terms "indicative of", "associated with", "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". It is to be noted that the word "based on" may be seen as "comprising" and/or "is". The terms "based on" and "as a function of' can be used interchangeably. For example, a parameter determined "based on" a data set can be seen as a parameter determined "as a function of' the data set. In other words, the parameter may be an output of one or more functions with the data set as an input. A parameter based on a data set can be seen as the parameter comprising and/or that the parameter is the data set.

A function may be characterizing a relation between an input and an output, such as mathematical relation, a database relation, a hardware relation, logical relation, and/or other suitable relations.

It should further be noted that any reference signs do not limit the scope of the claims, that the example embodiments may be implemented at least in part by means of both hardware and software, and that several "means", "units" or "devices" may be represented by the same item of hardware.

The various example methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

### LIST OF REFERENCES

- 2: hearing device
- 2A: hearing device
- 2B: hearing device
- 2C: hearing device corresponding to hearing device 2A
- 2D: hearing device corresponding to hearing device 2B
- 2E: hearing device
- 3: server
- 4: accessory device
- 5: wireless communication signal
- 6: receiver
- 8: first secondary machine learning (ML) model
- 14: controller
- 15: audio processor
- 16: first primary machine learning (ML) model
- 18A: first microphone
- 18B: second microphone
- 20: sensor
- 22: processor of accessory device
- 24: interface
- 26: first sensor
- 28: second, sensor, accessory device microphone
- 29: third sensor
- 30: second machine learning model
- 32: processor
- 40: wireless bilateral communication
- 42: first primary machine learning (ML) model / first primary model input
- 44: first primary machine learning (ML) model / first primary model output
- 46: controller output
- 48: controller input
- 50: first secondary machine learning (ML) model / first secondary model input
- 52: first secondary machine learning (ML) model / first secondary model output
- 54: accessory device input
- 56: accessory device output
- 58: sensor output
- 58A: first sensor output
- 58B: second sensor output
- 60: second machine learning (ML) model / second model input
- 62: second machine learning (ML) model / second model output
- 64: audio processor input
- 66: audio processor output
- 66B: second primary machine learning model output
- 68: hearing device output
- 70: first microphone input signal
- 72: second microphone input signal
- 74: sensor output
- 100: hearing system
- 200: hearing system
- 300: hearing device
- 301: hearing device memory circuitry
- 302: hearing device processor circuitry
- 303: hearing device interface
- 400: accessory device
- 401: accessory device memory circuitry
- 402: accessory device processor circuitry
- 403: accessory device interface
- 600: training system
- 602: dataset
- 604: training module
- 606: feature detection module
- 608: cost function module
- 610: score dataset
- 700: method of training an ML model of a hearing device
- 800: method of training an ML model of an accessory device
- 900: method of training a first primary ML model of a hearing device
- 1000: method of training a secondary ML model of a hearing device
- S102: obtaining training dataset
- S104: applying datasets
- S106: training first ML model
- S 202: obtaining training dataset
- S 204: applying datasets
- S 206: training second ML model
- S302: obtaining training dataset
- S204: applying datasets
- S306: training first primary ML model
- S402: obtaining training dataset
- S404: applying datasets
- S406: training first secondary ML model

## Claims

1. A hearing device comprising an interface and one or more processors, the one or more processors comprising a first primary machine learning model and a first secondary machine learning model, the first primary machine learning model for provision of a first primary model output based on a first primary model input, the first secondary machine learning model for provision of a first secondary model output based on a first secondary model input, wherein the first secondary model input is based on the first primary model output.

2. Hearing device according to claim 1, wherein the first primary model input is based on the first secondary model output.

3. Hearing device according to any one of claims 1-2, wherein the hearing device comprises a first microphone for provision of a first microphone input signal, the first secondary model input comprising the first microphone input signal, and wherein the first secondary model output is based on the first microphone input signal.

4. Hearing device according to claim 3, wherein the first primary model input comprises the first microphone input signal, and wherein the first primary model output is based on the first microphone input signal.

5. Hearing system according to any one of claims 3-4, wherein the first primary machine learning model comprises a noise model for provision of a noise model output based on the first microphone input signal, and wherein the first primary model output is based on the noise model output.

6. Hearing system according to any one of claims 3-5, wherein the first primary machine learning model comprises a voice model for provision of a voice model output based on the first microphone input signal, and wherein the first primary model output is based on the noise model output.

7. Hearing system according to any one of claims 3-6, wherein the first primary machine learning model comprises a gain model for provision of a gain model output based on the first microphone input signal, and wherein the first primary model output is based on the gain model output.

8. Hearing system according to any one of claims 3-7, wherein the first secondary machine learning model comprises a beamforming model for provision of a beamforming model output based on the first microphone input signal, and wherein the first primary model output is based on the beamforming model output.

9. A computer-implemented method for training a first primary machine learning model of a hearing device, the method comprising:
obtaining a training dataset comprising an audio training dataset, a model output training dataset, and a target output signal, the audio training dataset comprising one or more microphone input signals including a first microphone input signal and/or a second microphone input signal, and the model output training dataset comprising first secondary model output of a first secondary machine learning model;
applying the audio training dataset and the model output training dataset as respective inputs to the first primary machine learning model for provision of a first primary model output; and
training the first primary machine learning model based on the first primary model output and the target output signal.

10. A computer-implemented method for training a first secondary machine learning model of a hearing device, the method comprising:
obtaining a training dataset comprising an audio training dataset, a model output training dataset, and a target output signal, the audio training dataset comprising one or more microphone input signals including a first microphone input signal and/or a second microphone input signal, and the model output training dataset comprising first primary model output of a first primary machine learning model;
applying the audio training dataset and the model output training dataset as respective inputs to the first secondary machine learning model for provision of a first secondary model output; and
training the first secondary machine learning model based on the first secondary model output and the target output signal.
